(19) Europäisches Patentamt
European Patent Office
Office européen des brevets

(11) EP 1 193 934 B1

(12) **EUROPEAN PATENT SPECIFICATION**

(45) Date of publication and mention
of the grant of the patent:
**12.08.2009 Bulletin 2009/33**

(51) Int Cl.:
***H04L 27/26*** (2006.01)

(21) Application number: **01123481.2**

(22) Date of filing: **28.09.2001**

(54) **Frequency offset correction in multicarrier receivers**

Korrektur eines Frequenzversatzes in Mehrträgerempfängern

Corrections de décalages de fréquence dans des récepteurs multiporteuses

(84) Designated Contracting States:
**DE FR GB**

(30) Priority: **29.09.2000 KR 2000057327**

(43) Date of publication of application:
**03.04.2002 Bulletin 2002/14**

(73) Proprietor: SAMSUNG ELECTRONICS CO., LTD.
**Kyungki-do (KR)**

(72) Inventors:
• **Seo, Jae-Hyun**
**Paldal-gu,**
**Suwon-shi,**
**Kyungki-do (KR)**
• **Han, Dong-Seog**
**c/o SAMSUNG ELEC.CO.LTD, INT.PROP.T**
**Suwon City, Kyungki-Do, 442-742 (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 896 457** **US-A- 5 742 637**

• **SLOCUMB B J ET AL: "A polynomial phase parameter estimation-phase unwrapping algorithm" ACOUSTICS, SPEECH, AND SIGNAL PROCESSING, 1994. ICASSP-94., 1994 IEEE INTERNATIONAL CONFERENCE ON ADELAIDE, SA, AUSTRALIA 19-22 APRIL 1994, NEW YORK, NY, USA,IEEE, vol. iv, 19 April 1994 (1994-04-19), pages IV-129, XP010134032 ISBN: 0-7803-1775-0**

**Description**

The present invention relates generally to an OFDM (Orthogonal Frequency Division Multiplexing) system, and in particular, to an apparatus and method for acquiring frequency synchronization using a correlation between successive symbols.

OFDM is widely applied to digital transmission technology including DAB (Digital Audio Broadcasting), the digital TV, WLAN (Wireless Local Area Network), and WATM (Wireless Asynchronous Transfer Mode). The OFDM is a multi-carrier scheme in which transmission data is divided into a plurality of data, modulated with a plurality of sub-carriers, and transmitted in parallel.

While the OFDM scheme was not used widely because of its hardware complexity, it becomes advantageous as digital signal processing techniques such as FFT (Fast Fourier Transform) and IFFT (Inverse Fast Fourier Transform) have been developed. The OFDM scheme is different from conventional FDM (Frequency Division Multiplexing) in that data is transmitted with orthogonality maintained among a plurality of sub-carriers. Therefore, optimal transmission efficiency can be obtained during high rate transmission. Due to this advantage, the OFDM has been implemented in diverse forms like an OFDM/TDMA (Orthogonal Frequency Division Multiplexing/Time Division Multiple Access) system and an OFDM/CDMA (Orthogonal Frequency Division Multiplexing/Code Division Multiple Access) system.

In the case that the Doppler effect occurs in view of channel characteristics or a tuner in a receiver is not stable, a transmission frequency may not be synchronized to a reception frequency in an OFDM transmission system. The unstable tuning between carriers produces a frequency offset which in turn changes the phase of an input signal. Consequently, orthogonality is lost between sub-carriers and the decoding performance of the system is deteriorated. In this case, a slight frequency offset becomes a significant cause of the system performance deterioration. Accordingly, frequency synchronization is essential to the OFDM transmission system to maintain orthogonality between sub-carriers.

In general, a frequency offset in a receiver is eliminated on a sub-carrier interval basis and can be expressed as an integer part and a decimal part by dividing the frequency offset by a sub-carrier interval. Here, elimination of an initial frequency offset corresponding to the integer part is coarse frequency synchronization and elimination of a residual offset corresponding to the decimal part after the coarse frequency synchronization is fine frequency synchronization.

EP0896457 showsan apparatus for determining symbol timing information from an input signal having a symbol duration and including at least one OFDM symbol having at least one guard interval, comprising:

correlation means for providing a product of the input signal with a complex conjugate of a delayed input signal; means for calculating argument values of said product for providing a conditioned signal having a transition in phase values by rendering phase values of a portion of the symbol duration substantially less than phase values of the remaining portion of the symbol duration; and detection means, coupled to receive the conditioned signal from said means for calculating argument values, for detecting said transition in phase values as symbol timing information.

The frequency synchronization technology in the OFDM system is considered in two parts: an algorithm using a pre-FFT signal on a time domain and an algorithm using a post-FFT signal on a frequency domain. According to the former algorithm, a transmitter duplicates part of an effective symbol, adds the duplicate as a guard interval to the effective symbol, and transmits the resulting symbol to a receiver. Then, the receiver receives such symbols from the transmitter and estimates a frequency offset utilizing a phase difference between the symbols, proportional to the frequency offset. The phase difference is one between the pilot signals of received symbols. Both the transmitter and the receiver know the pilot signals. Thus, the frequency offset is estimated based on the phase difference between the pilot signals. An estimated frequency offset can be expressed as a real part and an imaginary part. Phase information is acquired using the sum of real parts and the sum of imaginary parts.

In the case that the transmission signal is in a multipath-like adverse channel environment, however, a linear region is decreased in a characteristic curve, namely, an S curve of a phase detector for detecting a phase difference between pilot signals, thereby deteriorating phase detection performance. Consequently, the frequency synchronization takes a long time since phase difference detection and compensation for a frequency offset should be repeatedly performed.

It is, therefore, the object of the present invention to provide a frequency offset compensating apparatus and method which can reduce the time required to acquire frequency synchronization and simplify a frequency offset compensation process.

To achieve the above object of the present invention, there is provided an apparatus and method for compensating for a frequency offset in an OFDM system. In a frequency offset compensating apparatus according to one aspect of the present invention, a phase detection portion separates effective data symbols and guard interval symbols from an input signal, correlates the effective data symbols to the guard interval symbols, and detects a phase based on correlations. A phase compensation portion performs phase compensation by inverting the sign of the latter of successive symbols if the phase difference between the successive symbols is a predetermined value or greater. A phase offset estimator averages compensated phases and estimates a frequency offset based on the average.

In a frequency offset compensating apparatus according to another aspect of the present invention, a phase detection portion separates effective data symbols and guard interval symbols from an input signal, correlates the effective data symbols to the guard interval symbols, and detects a phase based on correlations. A phase compensation portion performs phase compensation by inverting the sign of the latter of successive symbols if the phase difference between the successive symbols is a predetermined value or greater and by maintaining the signs of the successive symbols if the phase difference is below the predetermined value. A phase offset estimator averages compensated phases and estimates a frequency offset based on the average.

In a frequency offset compensating method according to a further aspect of the present invention, an input signal is separated into effective data symbols and guard interval symbols from, the effective data symbols are correlated to the guard interval symbols, and a phase is detected based on correlations. Phase compensation is performed by inverting the sign of the latter of successive symbols if the phase difference between the successive symbols is a predetermined value or greater. Compensated phases are averaged and a frequency offset is estimated based on the average.

In a frequency offset compensating method according to still another aspect of the present invention, an input signal is separated into effective data symbols and guard interval symbols from, the effective data symbols are correlated to the guard interval symbols, and a phase is detected based on correlations. Phase compensation is performed by inverting the sign of the latter of successive symbols if the phase difference between the successive symbols is a predetermined value or greater and by maintaining the signs of the successive symbols if the phase difference is below the predetermined value. Compensated phases are averaged and a frequency offset is estimated based on the average.

The above object, features and advantages of the present invention will become more apparent from the following detailed description when taken in conjunction with the accompanying drawings in which:

FIG. 1 is a block diagram of a transmitter in an OFDM system to which the present invention is applied;

FIG. 2 is a block diagram of a receiver in the OFDM system;

FIG. 3 illustrates the structure of a signal frame in the OFDM system;

FIG. 4 illustrates a signal frame on a time domain and on a frequency domain in the OFDM system;

FIG. 5 is a block diagram of a frequency offset compensating apparatus according to an embodiment of the present invention;

FIG. 6 is a graph showing characteristics of the frequency offset compensating apparatus in an ideal channel environment according to the embodiment of the present invention; and

FIG. 7 is a graph showing characteristics of the frequency offset compensating apparatus in a multipath channel environment according to the embodiment of the present invention.

A preferred embodiment of the present invention will be described hereinbelow with reference to the accompanying drawings. In the following description, well-known functions or constructions are not described in detail since they would obscure the invention in unnecessary detail.

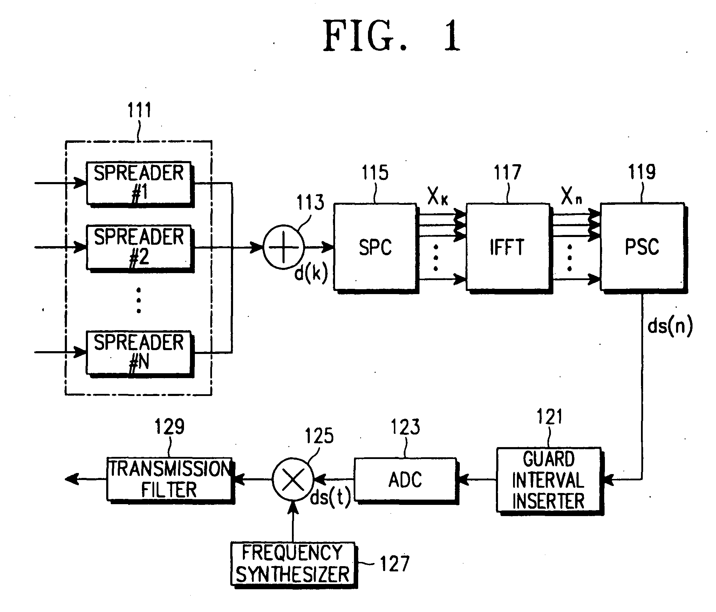

FIG. 1 is a block diagram of a transmitter in an OFDM system to which the present invention is applied. The OFDM system is incorporated into a CDMA system.

Referring to FIG. 1, a spreading portion 111 spreads transmission data (Tx data) with orthogonal codes and PN (Pseudorandom Noise) sequences. Both the transmitter and a receiver know orthogonal codes and PN sequences. An adder 113 sums the spread data received from the spreading portion 111 and outputs a serial signal d(k). A serial-to-parallel converter (SPC) 115 converts the serial signal d(k) to a predetermined number of, say, N parallel data $X_k$. The symbol length of the parallel data $X_k$ is increased to N times the symbol length of the serial data d(k).

An IFFT (Inverse Fast Fourier Transformer) 117 modulates the parallel data $X_k$ with N sub-carriers and outputs modulation data $X_n$. That is, the parallel data $X_k$ is converted to a complex number corresponding to the phase and amplitude of each sub-carrier, assigned to the respective sub-carriers on a frequency spectrum, and inverse fast Fourier-transformed on a time spectrum. Thus, the parallel data $X_k$ are modulated with the N sub-carriers to the modulation data $X_n$ which can be expressed as

$$X_n = \frac{1}{N}\sum_{k=0}^{N-1} X_k e^{j2\pi nk/N} \quad (n = 1, 2, 3, 4, .., N)$$

$$. . . . . (1)$$

A parallel-to-serial converter (PSC) 119 converts the parallel data $X_n$ to serial data $d_s(n)$. A guard interval inserter 121 inserts guard intervals into the serial data $d_s(n)$. When a transmission channel causes inter-symbol interference (ISI), a guard interval is inserted between transmission symbols to absorb the inter-symbol interference. Consequently, orthogonality between sub-carriers can be maintained in the OFDM system.

A digital-to-analog converter (DAC) 123 converts the data received from the guard interval inserter 121 to an analog baseband signal $d_s(t)$. A mixer 125 mixes the signal $d_s(t)$ with a synthetic carrier frequency received from a frequency synthesizer 127 and outputs real transmission data P(t), given by

$$P(t) = d_s(t)e(jWct)$$

$$. . . . . (2)$$

where Wc is the synthetic carrier frequency. A transmission filter 129 filters out the transmission data P(t) to a baseband signal and transmits the baseband signal.

Additive White Gaussian noise (AWGN) is added to the transmission data P(t) in the air during transmission to a receiver.

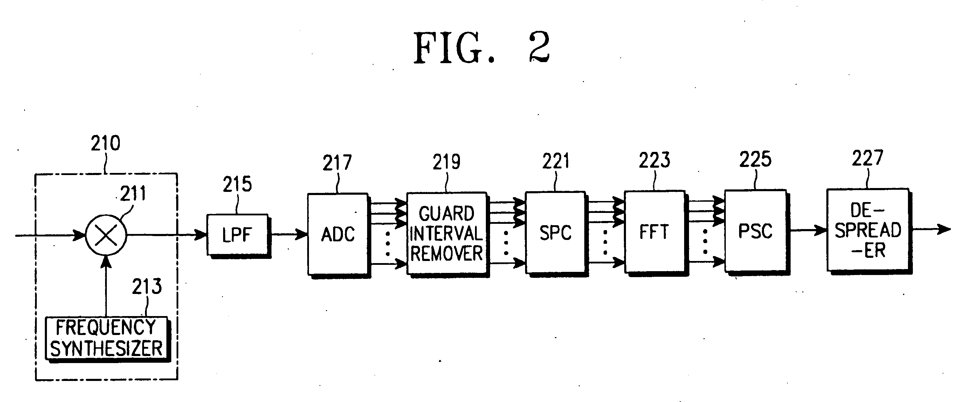

The structure of the receiver will be described with reference to FIG. 2.

FIG. 2 is a block diagram of the receiver in the OFDM system to which the present invention is applied.

A carrier signal including the AWGN is applied to the input of a multiplier 211. The multiplier 211 down-converts the frequency of the input carrier signal to an intermediate frequency (IF) by mixing the carrier signal with a predetermined local oscillation frequency synthesized in a frequency synthesizer 213. A low pass filter (LPF) 215 low-pass-filters the IF signal received from the multiplier 211. Let the baseband signal output from the LPF 215 be $y_i$ and $y_i$ can be expressed as

$$y_i = \sum_{k=0}^{N-1} H_k X_k e^{j2\pi(k\Delta f \to f_{offset})t} + w_i$$

$$. . . . . (3)$$

where $H_k$ is a channel transmission function, $f_{offset}$ is a frequency offset, $\Delta f$ is a sub-carrier interval, and $w_i$ is AWGN.

An ADC 217 converts an IF signal received from the LPF 215 to a digital signal $y_n$ by sampling the IF signal at predetermined intervals.

$$y_n = \sum_{k=0}^{N-1} H_k X_k e^{j2\pi(K+\varepsilon)n/N} + w_n$$

$$. . . . . (4)$$

where ε is a frequency offset normalized in the sub-carrier interval (i.e., $\varepsilon = \dfrac{f_{offset}}{\Delta f}$) and $t - \dfrac{nT_u}{N}$. $T_u$ is an effective

symbol period (i.e., $T_u = \dfrac{1}{\Delta f}$) and N is the number of effective symbol samples, that is, the size of an FFT block. The signal $y_n$ is expressed with N samples of effective symbols and L samples of guard interval symbols being duplicated parts of the effective symbols. In other words, one symbol includes N+L samples on the time domain, N samples are effective symbols, and L samples are guard interval symbols.

A guard interval remover 219 removes guard intervals from the digital signal. An SPC 221 converts the guard intervals-free signal received from the guard interval remover 219 to parallel data. An FFT 223 OFDM-demodulates the parallel data with a plurality of sub-carriers and a PSC 225 converts the demodulated parallel data to serial data by adding symbol data received in parallel. A despreader 227 despreads the serial symbol data, thereby recovering original data.

It is important to acquire frequency synchronization between the sub-carriers in the above receiver. The frequency synchronization makes it possible to maintain orthogonality between the sub-carriers and thus to decode a signal accurately. A frequency offset compensating apparatus for the frequency synchronization according to an embodiment of the present invention will be described below.

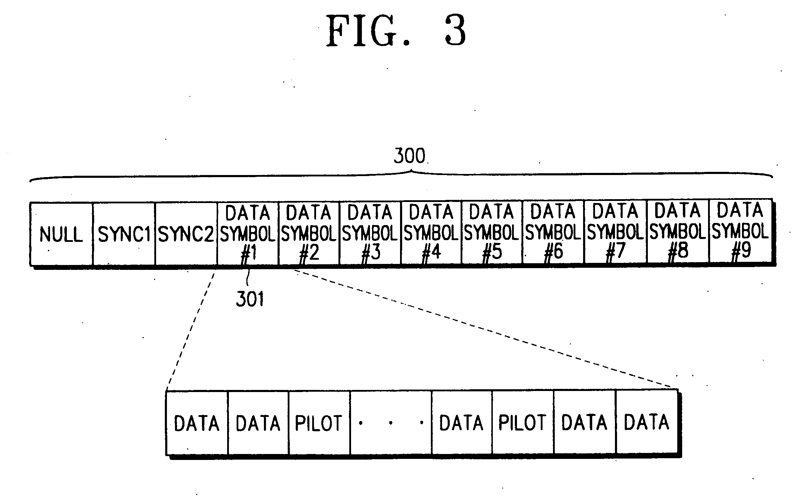

FIG. 3 illustrates the format of a signal frame used in the OFDM system shown in FIGs. 1 and 2.

Referring to FIG. 3, a frame 300 used in the OFDM system includes 12 symbols. A symbol NULL indicates the start of the frame 300 and symbols Sync #1 and Sync #2 are sync symbols, and data symbol #1 301 to data symbol #9 are real transmission data. A data symbol, say, data symbol #1 301 has a predetermined number of, for example, 256 data. A predetermined number of, for example, 10 pilot data are inserted in the 256 data so that the receiver can compensate for a frequency offset between sub-carriers by phase estimation of the pilot data.

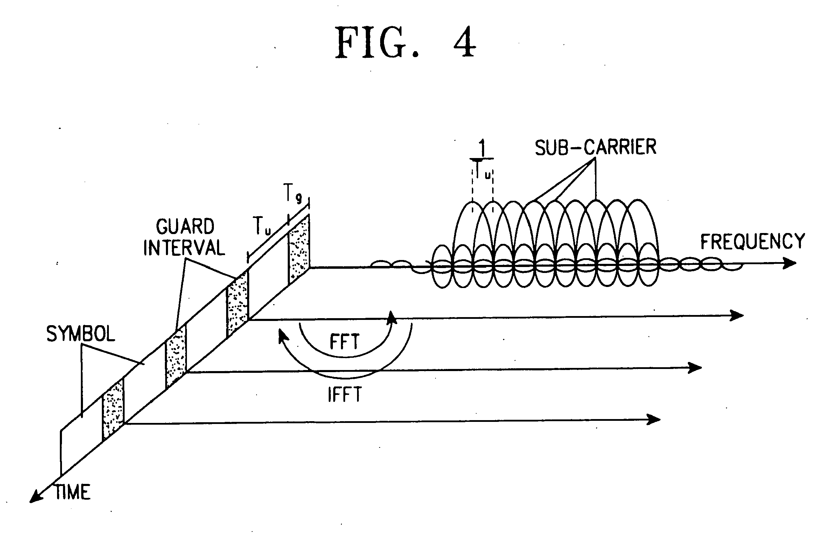

FIG. 4 illustrates a signal frame on a frequency domain and on a time domain in the OFDM system.

Referring to FIG. 4, a guard interval $T_g$ is added to an effective symbol $T_u$ for transmission. A plurality of sub-carriers form a single carrier.

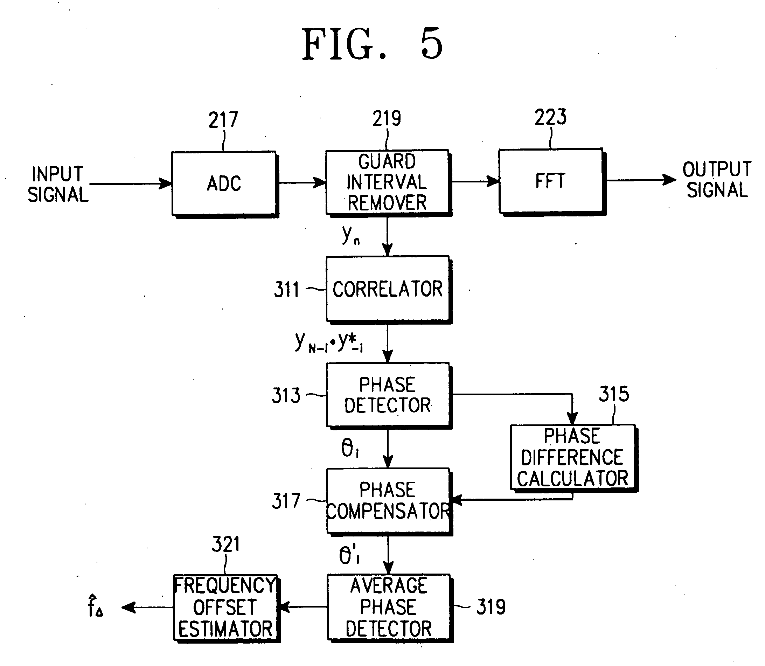

FIG. 5 is a block diagram of the frequency offset compensating apparatus according to the embodiment of the present invention.

As stated above, the signal $y_n$ output from the ADC 217 can be expressed as a symbol $y_{symbol}$ including an effective symbol and a guard interval symbol.

$$y_{symbol} = [y_{-L+1}, y_{-L+2}, \ldots, y_{-1}, y_0, y_1, y_2, \ldots, y_{N-1}, y_N]$$

$$\ldots \ldots \ldots (5)$$

where the guard interval symbol includes L samples $[y_{-L+1}, y_{-L+2}, \ldots, y_{-1}, y_0]$ and the effective symbol includes N samples $[y_1, y_2, \ldots, y_{N-1}, y_N]$.

The guard interval remover 219 removes a guard interval symbol from the output of the ADC 217 and feeds the effective symbol to the FFT 223 and a correlator 311.

The correlator 311 separates the guard interval symbol and the effective symbol from the signal received from the guard interval remover 219 and correlates the effective symbol sample $y_{N-i}$ to the guard interval symbol sample $y_{-i}$. i is the number of a sample and $0 < i \le L-1$.

The correlator 311 outputs the correlation $y_{N-i} \cdot y_{-i}^*$ to a phase detector 313. Here, the correlator 311 correlates the guard interval symbol samples with as many effective symbol samples and thus the correlation is a correlation value between samples. The phase detector 313 detects a phase from the correlation received from the correlator 311. That is, the correlation between the pilot signal of an effective symbol sample and the pilot signal of a guard interval symbol sample is achieved by calculating the inner product of the data value of the pilot signal of the effective symbol sample and that of the pilot signal of the guard interval symbol sample. If the correlation is a real number, it means that a signal having orthogonality has been received. On the other hand, if the correlation is a complex number, it means that a signal with orthogonality loss has been received.

The phase detector 313 detects a phase from the correlation received from the correlator 311 by

$$\Theta_i = \tan^{-1} \frac{\mathrm{Im}(y_{N-i} \cdot y^{\bullet}_{-i})}{\mathrm{Re}(y_{N-i} \cdot y^{\bullet}_{-i})}$$

$$\cdots \cdots (6)$$

A phase difference calculator 315 calculates the phase difference between successive data symbols and feeds the phase difference to a phase compensator 317.

If the phase difference is a threshold (e.g., $\pi$) or greater, the phase compensator 317 inverts the sign of the phase of the latter of the successive symbols. That is, if $\Theta_i - \Theta_{i+1} \geq \pi$, $\Theta'_{i+1} = -\Theta_{i+1}$. Here, $\Theta'$ is a compensated phase. If the phase difference is below the threshold, the sign of the latter symbol is maintained. That is, if $\Theta_i - \Theta_{i+1} \langle \pi$, $\Theta'_{i+1} = \Theta_{i+1}$.

An average phase detector 319 accumulates compensated phases received from the phase compensator 317 and calculates the average of the accumulated phases. A frequency offset estimator 321 estimates a frequency offset from the average phase by

$$\hat{f}_\Lambda = \frac{1}{2\pi L} \sum_{i=0}^{L-1} \Theta'_i$$

$$\cdots \cdots (7)$$

The fine frequency synchronization can be implemented with the use of the frequency offset estimate $\hat{f}_\Lambda$.

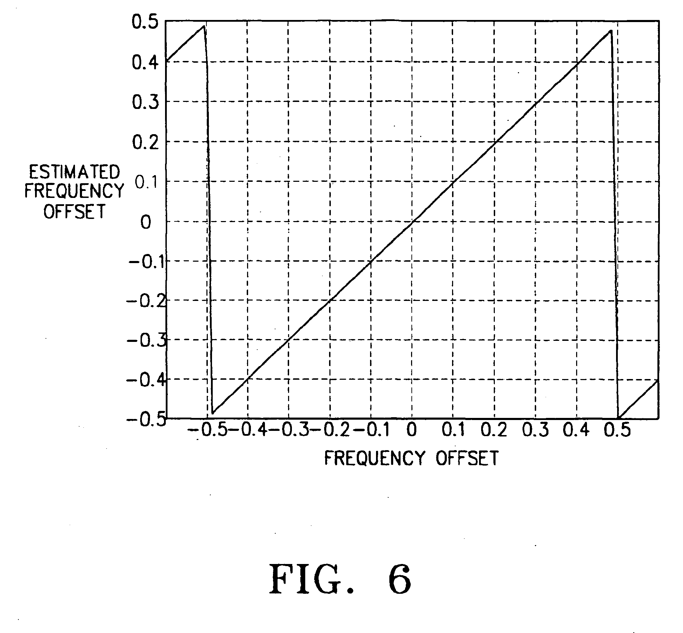

Now, there will be given a description of the characteristic curve of the phase detector for frequency offset compensation under an ideal channel environment in the frequency offset estimation according to the embodiment of the present invention with reference to FIG. 6.

FIG. 6 illustrates the characteristic curve of the frequency offset compensating apparatus according to the embodiment of the present invention in an ideal channel environment. Referring to FIG. 6, the characteristic curve forms a linear area from -0.5 to +0.5 in frequency offset $\varepsilon$. The linearity of the characteristic curve, namely, the S curve of the frequency offset compensating apparatus enables accurate phase detection and thus accurate frequency offset estimation.

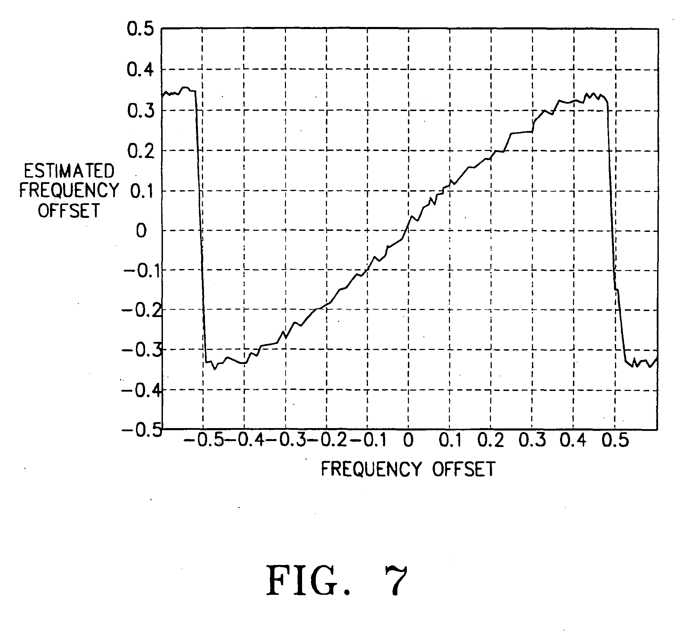

Since the real channel environment is not ideal and causes diverse channel changes, it was difficult to maintain the linearity in the conventional frequency offset compensation. However, it is possible to maintain the linearity even in a real channel environment as shown in FIG. 7 in the embodiment of the present invention because of accurate phase detection and frequency offset estimation.

FIG. 7 illustrates the characteristic curve of the frequency offset compensating apparatus according to the embodiment of the present invention in a multipath channel environment. Referring to FIG. 7, a signal-to-noise ration (SNR) is 5dB and a Rayleigh channel without a main path is used by way of example.

The characteristic curve of FIG. 7 maintains linearity similar to that shown in FIG. 6. That is, a linear area is formed between -0.5 to +0.5 in frequency offset $\varepsilon$. Accordingly, the deterioration of phase detection performance caused by a decrease in a linear area can be prevented and the process of phase difference detection and frequency offset compensation is simplified. As a result, frequency synchronization can be performed with less time.

In accordance with the present invention as described above, guard interval symbol samples are correlated to as many effective symbol samples in a data symbol and the phase of the data symbol is detected based on the correlations. The phases of data symbols are compensated using the phase difference between the data symbols, thereby enabling accurate frequency offset estimation and thus acquisition of accurate fine frequency synchronization.

Even in a multipath-like adverse channel environment, a linear area is maintained in the characteristic curve, S curve of a phase detector for detecting a phase difference between pilot signals of a transmitted signal and a received signal, thereby preventing deterioration of phase detection performance caused by the decrease of the linear area.

The resulting accurate phase difference detection and frequency offset compensation reduces the time required to acquire frequency synchronization.

**Claims**

1.  A frequency offset compensating apparatus in an orthogonal frequency division multiplexing (OFDM) system, comprising:

    a phase detection portion (311, 313) for separating effective data symbols and guard interval symbols from an input signal, correlating the effective data symbols to the guard interval symbols, and detecting a phase based on correlations;
    a phase compensation portion (315, 317) for performing phase compensation by inverting the sign of the latter of successive symbols if the phase difference between the successive symbols is a predetermined value or greater; and
    a phase offset estimator (319) for averaging compensated phases and estimating a frequency offset based on the average.

2.  The frequency offset compensating apparatus of claim 1, wherein correlations are detected by correlating pilot signals of the effective symbols to pilot signals of the guard interval symbols.

3.  The frequency offset compensating apparatus of claim 1 or 2, wherein if the phase difference is $\pi$ or greater, the sign of the latter symbol is inverted.

4.  The frequency offset compensating apparatus of one of the claims 1 to 3, wherein guard interval symbols are correlated to as many effective symbols.

5.  The frequency offset compensating apparatus of one of the claims 1 to 4, wherein the phase detection portion comprises:

    a correlator for detecting the correlations of the successive symbols; and
    a phase detector for detecting the phases of the successive symbols based on the correlations received from the correlator.

6.  The frequency offset compensating apparatus of one of the claims 1 to 5, wherein the phase compensation portion comprises:

    a phase difference calculator for calculating the phase difference between the successive symbols; and
    a phase compensator for compensating the phases of the symbols by inverting the sign of the latter symbol if the phase difference is the predetermined value or greater.

7.  The frequency offset compensating apparatus of one of the claims 1 to 6, wherein the phase offset estimator comprises;

    an average phase detector for accumulating the compensated phases and calculating the average of the phases; and
    a frequency offset estimator for estimating the frequency offset based on the average.

8.  The frequency offset compensating apparatus of one of the claims 1 to 7, wherein the phase compensation portion is further adapted for performing phase compensation by maintaining the signs of the successive symbols if the phase difference is below the predetermined value.

9.  A frequency offset compensating method in an OFDM system, comprising the steps of:

    separating effective data symbols and guard interval symbols from an input signal, correlating the effective data symbols to the guard interval symbols, and detecting a phase based on the correlations;
    performing phase compensation by inverting the sign of the latter of successive symbols if the phase difference between the successive symbols is a predetermined value or greater; and
    averaging compensated phases and estimating a frequency offset based on the average.

10. The frequency offset compensating method of claim 9, wherein correlations are detected by correlating pilot signals of the effective symbols to pilot signals of the guard interval symbols.

**11.** The frequency offset compensating method of claims 9 or 10, wherein if the phase difference is $\pi$ or greater, the sign of the latter symbol is inverted.

**12.** The frequency offset compensating method of one of the claims 9 to 11, wherein guard interval symbols are correlated to as many effective symbols.

**13.** The frequency offset compensating method of one of the claims 9 to 12, wherein the phase detection step comprises the steps of:

detecting the correlations of the successive symbols; and
detecting the phases of the successive symbols based on the correlations.

**14.** The frequency offset compensating method of one of the claims 9 to 13, wherein the phase compensation steps comprises the steps of:

calculating the phase difference between the successive symbols; and
compensating the phases of the symbols by inverting the sign of the latter symbol if the phase difference is the predetermined value or greater.

**15.** The frequency offset compensating method of one of the claims 9 to 14, wherein the frequency offset estimation step comprises the steps of;

accumulating the compensated phases and calculating the average of the phases; and
estimating the frequency offset based on the average.

**16.** The frequency offset compensating method of one of the claims 9 to 15:

wherein the step of performing phase compensation further comprises maintaining the signs of the successive symbols if the phase difference is below the predetermined value.

**Patentansprüche**

**1.** Frequenzversatz-Kompensationsvorrichtung in einem OFDM-System (orthogonal frequency division multiplexing system), die umfasst:

einen Phasenerfassungsabschnitt (311, 313) zum Trennen von effektiven Datensymbolen und Schutzintervall-Symbolen von einem Eingangssignal, zum Korrelieren der effektiven Datensymbole zu den Schutzintervall-Symbolen sowie zum Erfassen einer Phase auf Basis von Korrelationen;
einen Phasenkompensationsabschnitt (315, 317) zum Durchführen von Phasenkompensation durch Invertieren des Vorzeichens des letzteren aufeinanderfolgender Symbole, wenn die Phasendifferenz zwischen den aufeinanderfolgenden Symbolen einen vorgegebenen oder einen größeren Wert hat; und
eine Phasenversatz-Schätzeinrichtung (319) zum Mitteln kompensierter Phasen sowie zum Schätzen eines Frequenzversatzes auf Basis des Mittelwertes.

**2.** Frequenzversatz-Kompensationsvorrichtung nach Anspruch 1, wobei die Korrelationen erfasst werden, indem Pilotsignale der effektiven Symbole zu Pilotsignalen der Schutzintervall-Symbole korreliert werden.

**3.** Frequenzversatz-Kompensationsvorrichtung nach Anspruch 1 oder 2, wobei, wenn die Phasendifferenz $\pi$ oder größer ist, das Vorzeichen des letzteren Symbols invertiert wird.

**4.** Frequenzversatz-Kompensationsvorrichtung nach einem der Ansprüche 1 bis 3, wobei Schutzintervall-Symbole zu eben so vielen effektiven Symbolen korreliert werden.

**5.** Frequenzversatz-Kompensationsvorrichtung nach einem der Ansprüche 1 bis 4, wobei der Phasenerfassungsabschnitt umfasst:

eine Korrelationseinrichtung zum Erfassen der Korrelationen der aufeinanderfolgenden Symbole; und

eine Phasenerfassungseinrichtung zum Erfassen der Phasen der aufeinanderfolgenden Symbole auf Basis der von dem Korrelator empfangenen Korrelationen.

6. Frequenzversatz-Kompensationsvorrichtung nach einem der Ansprüche 1 bis 5, wobei der Phasenkompensationsabschnitt umfasst:

eine Phasendifferenz-Berechnungseinrichtung zum Berechnen der Phasendifferenz zwischen den aufeinanderfolgenden Symbolen; und
eine Phasenkompensationseinrichtung, mit der die Phasen der Symbole kompensiert werden, indem das Vorzeichen des letzteren Symbols invertiert wird, wenn die Phasendifferenz den vorgegebenen oder einen größeren Wert hat.

7. Frequenzversatz-Kompensationsvorrichtung nach einem der Ansprüche 1 bis 6, wobei die Phasenversatz-Schätzeinrichtung umfasst:

eine Phasenmittelwert-Erfassungseinrichtung zum Akkumulieren der kompensierten Phasen und zum Berechnen des Mittelwertes der Phasen; und
eine Frequenzversatz-Schätzeinrichtung zum Schätzen des Frequenzversatzes auf Basis des Mittelwertes.

8. Frequenzversatz-Kompensationsvorrichtung nach einem der Ansprüche 1 bis 7, wobei der Phasenkompensationsabschnitt des Weiteren so eingerichtet ist, dass er Phasenkompensation durchführt, indem die Vorzeichen der aufeinanderfolgenden Symbole beibehalten werden, wenn die Phasendifferenz unter dem vorgegebenen Wert liegt.

9. Frequenzversatz-Kompensationsverfahren in einem OFDM-System, das die folgenden Schritte umfasst:

Trennen von effektiven Datensymbolen und Schutzintervall-Symbolen von einem Eingangssignal, Korrelieren der effektiven Datensymbole zu den Schutzintervall-Symbolen und Erfassen einer Phase auf Basis der Korrelationen;
Durchführen von Phasenkompensation durch Invertieren des Vorzeichens des letzteren aufeinanderfolgender Symbole, wenn die Phasendifferenz zwischen den aufeinanderfolgenden Symbolen einen vorgegebenen oder einen größeren Wert hat; und
Mitteln kompensierter Phasen und Schätzen eines Frequenzversatzes auf Basis des Mittelwertes.

10. Frequenzversatz-Kompensationsverfahren nach Anspruch 9, wobei Korrelationen erfasst werden, indem Pilotsignale der effektiven Symbole zu Pilotsignalen der Schutzintervall-Symbole korreliert werden.

11. Frequenzversatz-Kompensationsverfahren nach den Ansprüchen 9 oder 10, wobei, wenn die Phasendifferenz $\pi$ oder mehr beträgt, das Vorzeichen des letzteren Symbols invertiert wird.

12. Frequenzversatz-Kompensationsverfahren nach einem der Ansprüche 9 bis 11, wobei die Schutzintervall-Symbole zu ebenso vielen effektiven Symbolen korreliert werden.

13. Frequenzversatz-Kompensationsverfahren nach einem der Ansprüche 9 bis 12, wobei der Phasenerfassungsschritt die folgenden Schritte umfasst:

Erfassen der Korrelationen der aufeinanderfolgenden Symbole; und
Erfassen der Phasen der aufeinanderfolgenden Symbole auf Basis der Korrelationen.

14. Frequenzversatz-Kompensationsverfahren nach einem der Ansprüche 9 bis 13, wobei der Phasenkompensationsschritt die folgenden Schritte umfasst:

Berechnen der Phasendifferenz zwischen den aufeinanderfolgenden Symbolen; und
Kompensieren der Phasen der Symbole durch Invertieren des Vorzeichens des letzteren Symbols, wenn die Phasendifferenz einen vorgegebenen oder einen größeren Wert hat.

15. Frequenzversatz-Kompensationsverfahren nach einem der Ansprüche 9 bis 14, wobei der Schritt des Schätzens des Frequenzversatzes die folgenden Schritte umfasst:

Akkumulieren der kompensierten Phasen und Berechnen des Mittelwertes der Phasen; und
Schätzen des Frequenzversatzes auf Basis des Mittelwertes.

16. Frequenzversatz-Kompensationsverfahren nach einem der Ansprüche 9 bis 15,
wobei der Schritt des Durchführens von Phasenkompensation des Weiteren Beibehalten der Vorzeichen der aufeinanderfolgenden Symbole umfasst, wenn die Phasendifferenz unter dem vorgegebenen Wert liegt.

**Revendications**

1. Dispositif de compensation de décalage de fréquence dans un système à multiplexage orthogonal par répartition en fréquence (OFDM pour "Orthogonal Frequence Division Multiplexing"), comprenant :

une section (311, 313) de détection de phase destinée à séparer des symboles utiles de données et des symboles d'intervalle de garde à partir d'un signal d'entrée, à corréler les symboles utiles de données avec les symboles d'intervalle de garde, et à détecter une phase en se basant sur des corrélations ;
une section (315, 317) de compensation de phase destinée à effectuer une compensation de phase en inversant le signe du dernier de symboles successifs si la différence de phase entre les symboles successifs est égale ou supérieure à une valeur prédéterminée ; et
un estimateur (319) de décalage de phase destiné à faire la moyenne de phases compensées et à estimer un décalage de fréquence en se basant sur la moyenne.

2. Dispositif de compensation de décalage de fréquence selon la revendication 1, dans lequel des corrélations sont détectées en corrélant des signaux pilotes des symboles utiles avec des signaux pilotes des symboles d'intervalle de garde.

3. Dispositif de compensation de décalage de fréquence selon la revendication 1 ou 2, dans lequel, si la différence de phase est de $\pi$ ou plus, le signe du dernier symbole est inversé.

4. Dispositif de compensation de décalage de fréquence selon l'une des revendications 1 à 3, dans lequel les symboles d'intervalle de garde sont corrélés avec autant de symboles utiles.

5. Dispositif de compensation de décalage de fréquence selon l'une des revendications 1 à 4, dans lequel la section de détection de phase comprend :

un corrélateur destiné à détecter les corrélations des symboles successifs ; et
un détecteur de phase destiné à détecter les phases des symboles successifs en se basant sur les corrélations reçues du corrélateur.

6. Dispositif de compensation de décalage de fréquence selon l'une des revendications 1 à 5, dans lequel la section de compensation de phase comprend :

un calculateur de différence de phase destiné à calculer la différence de phase entre les symboles successifs ; et
un compensateur de phase destiné à compenser les phases des symboles en inversant le signe du dernier symbole si la différence de phase est égale ou supérieure à la valeur prédéterminée.

7. Dispositif de compensation de décalage de fréquence selon l'une des revendications 1 à 6, dans lequel l'estimateur de décalage de phase comprend :

un détecteur de phase moyenne destiné à cumuler les phases compensées et à calculer la moyenne des phases ; et
un estimateur de décalage de fréquence destiné à estimer le décalage de fréquence en se basant sur la moyenne.

8. Dispositif de compensation de décalage de fréquence selon l'une des revendications 1 à 7, dans lequel la section de compensation de phase est en outre apte à effectuer la compensation de phase en conservant les signes des symboles successifs si la différence de phase est inférieure à la valeur prédéterminée.

**9.** Procédé de compensation de décalage de fréquence dans un système à OFDM, comprenant les étapes :

de séparation de symboles utiles de données et de symboles d'intervalle de garde à partir d'un signal d'entrée, de corrélations des symboles utiles de données avec les symboles d'intervalle de garde, et de détection d'une phase en se basant sur des corrélations ;
d'exécution d'une compensation de phase en inversant le signe du dernier de symboles successifs si la différence de phase entre les symboles successifs est égale ou supérieure à une valeur prédéterminée ; et
de calcul de la moyenne de phases compensées et d'estimation d'un décalage de fréquence en se basant sur la moyenne.

**10.** Procédé de compensation de décalage de fréquence selon la revendication 9, dans lequel des corrélations sont détectées en corrélant des signaux pilotes des symboles utiles avec des signaux pilotes des symboles d'intervalle de garde.

**11.** Procédé de compensation de décalage de fréquence selon la revendication 9 ou 10, dans lequel, si la différence de phase est de $\pi$ ou plus, le signe du dernier symbole est inversé.

**12.** Procédé de compensation de décalage de fréquence selon l'une des revendications 9 à 11, dans lequel les symboles d'intervalle de garde sont corrélés avec autant de symboles utiles.

**13.** Procédé de compensation de décalage de fréquence selon l'une des revendications 9 à 12, dans lequel l'étape de détection de phase comprend les étapes :

de détection des corrélations des symboles successifs ; et
de détection des phases des symboles successifs en se basant sur les corrélations.

**14.** Procédé de compensation de décalage de fréquence selon l'une des revendications 9 à 13, dans lequel les étapes de compensation de phase comprennent les étapes :

de calcul de la différence de phase entre les symboles successifs ; et
de compensation des phases des symboles en inversant le signe du dernier symbole si la différence de phase est égale ou supérieure à la valeur prédéterminée.

**15.** Procédé de compensation de décalage de fréquence selon l'une des revendications 9 à 14, dans lequel l'étape d'estimation de décalage de fréquence comprend les étapes :

de cumul des phases compensées et de calcul de la moyenne des phases ; et
d'estimation du décalage de fréquence en se basant sur la moyenne.

**16.** Procédé de compensation de décalage de fréquence selon l'une des revendications 9 à 15, dans lequel l'étape d'exécution de la compensation de phase comprend en outre la conservation des signes des symboles successifs si la différence de phase est inférieure à la valeur prédéterminée.

# FIG. 1

EP 1 193 934 B1

# FIG. 2

EP 1 193 934 B1

# FIG. 3

300

| NULL | SYNC1 | SYNC2 | DATA SYMBOL #1 | DATA SYMBOL #2 | DATA SYMBOL #3 | DATA SYMBOL #4 | DATA SYMBOL #5 | DATA SYMBOL #6 | DATA SYMBOL #7 | DATA SYMBOL #8 | DATA SYMBOL #9 |

301

| DATA | DATA | PILOT | · · · | DATA | PILOT | DATA | DATA |

EP 1 193 934 B1

FIG. 4

# FIG. 5

INPUT SIGNAL → ADC (217) → GUARD INTERVAL REMOVER (219) → FFT (223) → OUTPUT SIGNAL

$y_n$

CORRELATOR (311)

$y_{N-l} \cdot y^*_{-l}$

PHASE DETECTOR (313)

$\theta_l$

PHASE COMPENSATOR (317)

$\theta'_l$

AVERAGE PHASE DETECTOR (319)

PHASE DIFFERENCE CALCULATOR (315)

FREQUENCY OFFSET ESTIMATOR (321)

$\hat{f}_\Delta$

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0896457 A